# EUROPEAN PATENT APPLICATION

(11) **EP 2 551 328 A2**
(43) Date of publication of application: **30.01.2013**
(21) Application number: 12177383.2
(22) Date of filing: 20.07.2012
(51) Int. Cl.: C09K 11/76, H01J 61/44, C09K 11/78, C09K 11/82, C09K 11/81, C09K 11/80, C09K 11/64

(54) **Fluorescent Lamps Having High CRI and LPW**

(30) Priority: 27.07.2011 US 201113192017
(71) Applicant: General Electric Company, Schenectady, NY 12345 (US)
(72) Inventor: Du, Fangming, Cleveland, OH Ohio 44112 (US); Beers, William Winder, Cleveland, OH Ohio 44112 (US); Jansma, Jon Bennett, Cleveland, OH Ohio 44112 (US); Cohen, William Erwin, Cleveland, OH Ohio 44112 (US)
(74) Representative: Picker, Madeline Margaret

(57) **Abstract**

A fluorescent lamp including the four rare earth phosphor system provided herein exhibits high color rendering index (CRI), of at least 87, while simultaneously achieving high lumen output, or lumens per watt (LPW), of at least 80. The phosphor coating may be disposed in a one or two layer coating format. The four rare earth phosphor system includes a red emitting phosphor, a green emitting phosphor, a blue emitting phosphor, and a blue-green emitting phosphor, all four phosphors being rare earth-doped phosphor compositions.

## Description

### BACKGROUND OF THE DISCLOSURE

The present invention relates to phosphor compositions, particularly phosphors for use in fluorescent lamps. More particularly, the present invention relates to simultaneously improving the CRI and LPW of a fluorescent lamp by providing an optimized blend of four rare earth phosphors for use therein.

Fluorescent lamps typically have a transparent glass envelope enclosing a sealed discharge space containing an inert gas and mercury vapor. When subjected to a current provided by electrodes, the mercury ionizes to produce radiation having primary UV wavelengths of 185 nm and 254 nm. This ultraviolet radiation, in turn, excites phosphors on the inside surface of the envelope to produce visible light which is emitted through the glass.

Generally, a fluorescent lamp for illumination uses a phosphor which absorbs the 254 nm Hg-resonance wave and is activated so as to convert the ultraviolet luminescence of mercury vapor into visible light. Conventionally, a white-emitting calcium halophosphate phosphor, such as Ca₁₀(PO₄)₆(F,Cl)₂:Sb,Mn, has been used to convert the UV light to white light. In order to improve the color-rendering properties and emission output of fluorescent lamps, a three-band type fluorescent lamp, which employs a mixture of red, green and blue-emitting phosphors, has been used to render illumination of a white color. For example, the phosphor may include a mixture of europium-activated barium magnesium aluminate phosphor BaMgAl₁₀O₁₇:Eu²⁺, for the blue-emitting phosphor, cerium- and terbium-coactivated lanthanum phosphate phosphor, LaPO₄:Ce³⁺, Tb³⁺ for the green-emitting phosphor, and europium-activated yttrium oxide phosphor (Y₂O₃ :Eu³⁺) for the red-emitting phosphor, mixed in an adequate ratio. The combined spectral output of such a phosphor blend produces a white light.

The apparent, or perceived, color of a light source is described in terms of color temperature which is the temperature of a black body that emits radiation of about the same chromaticity as the radiation considered. A light source having a color temperature of 3000 Kelvin (K) has a larger weight percent of red component than a light source having a color temperature of 4100 K. The color temperature of a lamp using a phosphor blend can be varied by changing the ratio and composition of the phosphors.

Color quality is further described in terms of color rendering, and more particularly color rendering index (CRI or Rₐ), which is a measure of the degree to which the psycho-physical colors of objects illuminated by a light source conform to those of a reference illuminant for specified conditions. The CRI is calculated by comparing the color rendering of the test source to that of a "perfect" source, which is a black body radiator for sources with correlated color temperatures under 5000 K and a phase of daylight for sources with correlated color temperatures above 5000 K.

The color appearance of a lamp can be further described by its chromaticity coordinates which can be calculated from the spectral power distribution according to standard methods. See CIE, Method of measuring and specifying color rendering properties of light sources (2nd ed.), Publ. CIE No. 13.2 (TC-3,2), Bureau Central de la CIE, Paris, 1974. The CIE standard chromaticity diagram includes the color points of black body radiators at various temperatures. The locus of black body chromaticities on the x,y-diagram is known as the Planckian locus. Any light emitting source represented by a point on this locus may be specified by a color temperature. A point near but not on this Planckian locus has a correlated color temperature (CCT) because lines can be drawn from such points to intersect the Planckian locus at this color temperature such that all points on a given line look to the average human eye as having nearly the same color.

Another parameter with regard to light emission is luminous efficacy of a source of light is the quotient of the total luminous flux emitted by the total lamp power input as expressed in lumens per watt (LPW or 1m/W).

Spectral blending studies have shown that the LPW and CRI of white light sources are dependent upon the spectral distribution of the individual color phosphors. It is expected that such phosphors will remain stable during extended lamp operation such that the phosphors remain chemically stable over a period of time while maintaining stable CIE color coordinates of the lamp. The human eye does not have the same sensitivity to all visible light wavelengths. Rather, light with the same intensity but different wavelengths will be perceived as having different luminosity. The use of tri-phosphor blends has led to improvements in color rendering or LPW, though generally not both at the same time.

The three-phosphor systems referred to above may be able to achieve high LPW, but will generally have a CRI falling below 87. Conversely, other phosphor systems that achieve a CRI of 87 will exhibit an insufficient LPW. There is no system currently in use that achieves desirable high LPW, as well as a high CRI, particularly a CRI of above 87, simultaneously.

Thus, a need exists for a phosphor blend that provides CRI of at least 87 or better. Further, it is desirable to achieve this high CRI while at the same time providing desirable LPW of at least 80 or better to meet consumer preferences and provide additional consumer options. The use of a four rare earth phosphor blend in accord herewith leads to improved efficacy of various lighting sources in which it is used while improving the CRI and the LPW simultaneously.

### SUMMARY OF THE DISCLOSURE

A fluorescent lamp is provided including a phosphor blend comprising four rare earth phosphors. This phosphor blend provides a lamp that exhibits high color rendering index (CRI), of at least 87, for example at least 87.6, while simultaneously achieving high lumen output, or lumens per watt (LPW), of at least 80 or higher, depending on the lamp type and the CCT. The phosphor system provided includes a rare earth-doped red emitting phosphor, a rare earth-doped green emitting phosphor, a rare earth-doped blue emitting phosphor, and a rare earth-doped blue-green emitting phosphor.

In one embodiment, the phosphor system includes four rare earth phosphor selected from the following: YEO, Y(P,V)O4:Eu, CBM, LAP, CAT, CBT, BAM, SECA, SAE, and BAMn, wherein the phosphor system includes a blend of at least one red-emitting rare earth phosphor, at least one green-emitting rare earth phosphor, at least one blue-emitting rare earth phosphor, and at least one blue-green-emitting rare earth phosphor. In one embodiment, the phosphor system may include, for example, Y₂O₃:Eu²⁺, LaPO₄:Ce³⁺,Tb³⁺, BaMgAl₁₀O₁₇:Eu²⁺, and BaMgAl₁₀O₁₇:Eu²⁺,Mn²⁺, i.e. the phosphor system may include Y₂O₃:Eu²⁺ (48wt%), LaPO₄:Ce³⁺, Tb³⁺ (41.5wt%), BaMgAl₁₀O₁₇:Eu²⁺ (8.8wt%), and BaMgAl₁₀O₁₇:Eu²⁺,Mn²⁺ (1.8wt%), based on the total weight of the phosphor system. In another embodiment, the phosphor system may include, for example, Y₂O₃:Eu2⁺, LaPO₄:Ce³⁺,Tb³⁺, BaMgAl₁₀O₁₇:Eu²⁺, and Sr₄Al₁₄O₂₅:Eu²⁺, i.e. the phosphor system may include Y₂O₃:Eu²⁺ (61.5wt%), LaPO₄:Ce³⁺, Tb³⁺ 25.8wt%), BaMgAl₁₀O₁₇:Eu²⁺ (4.2wt%), and Sr₄Al₁₄O₂₅:Eu²⁺ (8.5wt%), based on the total weight of the phosphor system.

In one embodiment, the phosphor system is provided as one layer, disposed on the inner surface of the discharge chamber of a lamp. The one layer coating comprises a mixture of a red emitting phosphor, a green emitting phosphor, a blue emitting phosphor, and a blue-green emitting phosphor.

In another embodiment, the phosphor system is provided as a two-layer coating disposed on the inner surface of the discharge chamber of a lamp. In this phosphor coating, a first or base layer is a halo-phosphor layer. The second layer comprises a mixture of a red emitting phosphor, a green emitting phosphor, a blue emitting phosphor, and a blue-green emitting phosphor.

An advantage of the phosphor blend provided herein is that the lamp including such phosphor blend will exhibit high CRI. In addition, this same lamp, due to the presence of the phosphor blend in accord with this disclosure, will exhibit enhanced LPW as compared to a similar type and size of lamp, operating at the same CCT, without the 4 phosphor blend.

This and other advantages and benefits of the novel phosphor system provided herein will become apparent upon reading and understanding the disclosure that follows.

### BRIEF DESCRIPTION OF THE DRAWINGS

FIGURE 1 is a schematic cross-section of a fluorescent lamp having a phosphor layer in accord with the invention.
FIGURE 2 is provides the emission spectra of a phosphor blend in accord with the invention as compared to conventional phosphor blend spectra.
FIGURE 3 is a graph showing CRI for a phosphor blend in accord with the invention as compared to conventional phosphor blend.
FIGURE 4 is a graph showing LPW for a phosphor blend in accord with the invention as compared to conventional phosphor blend.

### DETAILED DESCRIPTION OF THE EMBODIMENTS

The present disclosure relates to a discharge lamp, for example a fluorescent lamp including a phosphor system comprising 4 rare earth phosphors. The four rare earth phosphor system provided herein exhibits high color rendering index (CRI), of at least 87, while simultaneously achieving high lumen output, or lumens per watt (LPW), of at least 80 or higher, depending on the type of lamp and the CCT thereof. The phosphor coating may be disposed in one or two layers. The four rare earth phosphor system includes a red emitting phosphor, a green emitting phosphor, a blue emitting phosphor, and a blue-green emitting phosphor, all four phosphors being rare earth-doped phosphor compositions.

In one embodiment, the phosphor system is provided as a single layer disposed on the inner surface of the discharge chamber of a lamp. The layer comprises a mixture of a red emitting phosphor, a green emitting phosphor, a blue emitting phosphor, and a blue-green emitting phosphor.

In another embodiment, the phosphor system is provided as a two-layer system. In this phosphor coating, a first or base layer is a halo-phosphor layer with right correlated color temperature (CCT). The second layer comprises a mixture of a red emitting phosphor, a green emitting phosphor, a blue emitting phosphor, and a blue-green emitting phosphor.

Either coating system may be provided for use on an inner surface of the discharge chamber or tube of a fluorescent lamp, whether linear, U-shaped, or otherwise configured. For example, the coating may be described herein with respect to use thereof in a standard T5, T8, T12, or CFL lamp configuration, as known in the art. One skilled in the art however will understand that the phosphor coating system provided herein has use beyond just the named linear formats, to all lighting solutions relying on a phosphor coating to convert light energy to visible white light emission. Therefore, though the phosphor system disclosed may be used on any type or size of discharge lamp, for clarity and ease of understanding the invention may at times be described particularly with reference to a 4 foot linear lamp design, operable at a CCT of no greater than 6500K. Such is not intended however to limit the inventive coating described and claimed to any specific lamp type, size or CCT.

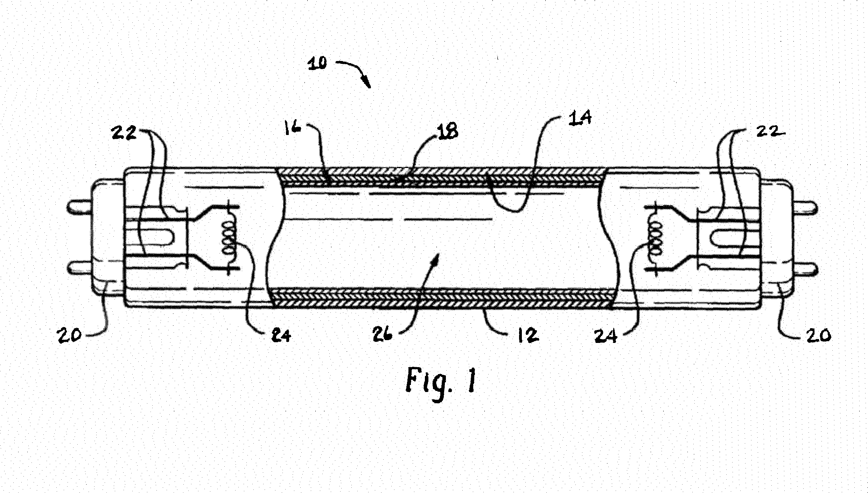

Referring to FIG. 1, there is depicted a representative fluorescent lamp 10 comprising an elongated silicate glass envelope 12 having a circular cross-section. The low pressure mercury discharge assembly in the lamp includes a pair of spaced conventional electrodes 24 at each end, connected to electrical contacts 22 fed through a base 20 fixed at both ends of the sealed glass envelope. The discharge-sustaining fill 26 in the sealed glass envelope is an inert gas such as argon, krypton, neon, xenon, or a mixture thereof at a low pressure in combination with a small quantity of mercury to provide the low vapor pressure manner of lamp operation. Deposited on the inner surface of the glass envelope is phosphor blend layer 16 including a blend of phosphors as described in the following disclosure. In one embodiment of the invention, the lamp 10 may have a second layer of material 14 positioned between the phosphor blend layer 16 and the inner surface of the glass envelope 12. This second layer can be an ultraviolet reflecting barrier layer as is known in the art. Such a barrier layer can comprise, for example, a mixture of alpha- and gamma-alumina particles.

In yet another embodiment, the lamp 10 may have a third layer 18 disposed between the second layer 14 and the phosphor blend layer 16. This third layer may be a halo-phosphor layer used as the base layer in a two-layer phosphor coating system. This layer would not be present in that embodiment where the phosphor blend coating is applied in a single layer.

The above illustrated phosphor layer coatings can be formed by various already known procedures, including but not limited to deposition from liquid coatings and electrostatic deposition. As such, the manner of coating deposition is not a limiting factor of the invention. For example, the phosphor can be deposited on the inner glass surface of the discharge tube from a conventional aqueous coating including various organic binders and adherence promoting agents. The aqueous coating is applied and then dried in the conventional manner.

The inventors have found that it is possible to further improve the efficacy of current lighting sources utilizing phosphor emissions by optimizing the phosphor blend to provide not only one of higher CRI or LPW performance, but to simultaneously improve both performance parameters. As used herein, the terms "luminosity" and "luminous efficacy" are synonymous. It has been discovered that the use of a blend of 4 rare earth phosphors having their peak emissions within specific spectral regions will lead to improvements in the luminosity of various lighting sources. For convenience, the discussion and examples described herein refer to the use of the optimized phosphor blend of the present invention in Hg-based fluorescent lamps. However, it should be recognized that the inventive concepts include applications relating to other light sources incorporating phosphors as well, such as white LEDs, discharge lamps, and plasma display panels.

In one embodiment of the present invention, an optimized phosphor blend for use in a light source having a color rendering index of at least about 87 or better is provided, while the optimized phosphor further provides for improved LPW of at least 80 or better, depending on the type, size and CCT of the lamp. Specifically, the phosphor blend includes one red emitting phosphor, one green emitting phosphor, one blue emitting phosphor, and one blue-green emitting phosphor, all phosphors being rare earth-doped phosphor compositions.

The above-described combination of phosphors will result in increased luminosity over conventional phosphor blends due to the inclusion of the four phosphors identified, and particularly to the inclusion of BAMn phosphor in conjunction with YEO, BAM, and LAP phosphors. This is true for lamps having a CCT of greater than about 4100 K. However, for those lamps having a CCT below about 4100 K, the BAMn may be replaced advantageously with SAE. The correlated color temperature (CCT) of the blend, which is determined based on the mass fraction of each phosphor in the system, may range from about 2500 K to about 6500 K. For example, it is known that the CCT will increase as the relative amount of blue phosphor in the blend increases and as the relative amount of the red phosphor decreases. Further, it is known that by using one or another of the green phosphors listed little change in performance in terms of CRI is rendered, thus allowing the green rare earth phosphor to be selected from more than one specific phosphor.

The phosphors suitable for use in the embodiments of the present invention include any that are capable of absorbing ultraviolet light and emitting light in the stated region. Although not intended to be limiting, examples of suitable phosphors of each type may include:
Red-Emitting Phosphor: europium-doped yttrium oxide (YEO);
europium-doped yttrium vanadate-phosphate (Y(P,V)O₄:Eu);
cerium- and manganese- coactivated gadolinium magnesium pentaborate (CBM)
Green-Emitting Phosphor: cerium- and terbium-coactivated phosphor (LAP, CAT, CBT)
Blue-Emitting Phosphor: europium-doped halophosphate (SECA)
europium-doped barium magnesium aluminate (BAM)
Blue-Green-Emitting Phosphor: europium- and manganese-coactivated barium magnesium aluminate (BAMn)
europium-doped strontium aluminate (SAE)

The relative proportions of the individual phosphors in the phosphor blend are such that the resulting light emitted from the lamp exhibits an increased CRI as compared to a tri-phosphor component blend consisting of one each of a conventional green, red and blue phosphor, but lacking the blue-green phosphor specified herein, e.g. BAMn or SAE, i.e. when blended, their emission will produce visible white light of predetermined CCT value between 2500 K and 6500 K. The blends will exhibit CRI and LPW of at least 87 and 80, respectively. The relative amounts of each phosphor can be described in terms of weight fraction. Although not intended to be limiting, the phosphor blend of the present invention may generally contain about [0.01-0.25], i.e. about 0.088, of a blue phosphor, about [0.01-0.15], i.e. about 0.018, of a blue-green phosphor, about [0.20-0.50], i.e. about 0.415, of a green phosphor, and about [0.40-0.70], i.e. about 0.48, of a red phosphor.

The following examples are provided to enable those skilled in the art to more clearly understand and practice the invention. The invention is in no way limited to the examples.

### EXAMPLES

Lamps were prepared with phosphor blend coatings in accord with an embodiment of the invention, as well as in accord with conventional fluorescent lamp phosphor blends. Several lamps were prepared from each blend noted, and each lamp was tested to determine the LPW and the CRI of that lamp. From this data, average LPW and CRI values were determined for each phosphor blend, as all other lamp parameters were held constant. All lamps were F32T8 lamp configurations, well known to those skilled in the art. All of the lamps were prepared to have a CCT of 4100 K for ease of comparison.

### EXAMPLE 1

Six lamps were prepared using a phosphor blend in accord with an embodiment of the invention, comprising YEO/ Y₂O₃:Eu², LAP / LaPO₄:Ce³⁺,Tb³⁺, BAM /BaMgAl₁₀O₁₇:Eu²⁺, and BAMn / BaMgAl₁₀O₁₇:Eu²⁺,Mn²⁺. The lamps were 4 foot F32T8 Linear Fluorescent Lamps at 4100 K.

**TABLE 1: YEO-LAP-BAM-BAMn PHOSPHOR SYSTEM**

| **LAMP NUMBER** | **LPW** | **CRI** |
|---|---|---|
| 1 | 86.3 | 87.6 |
| 2 | 86.1 | 87.6 |
| 3 | 86.2 | 87.5 |
| 4 | 87.1 | 87.6 |
| 5 | 86.2 | 87.3 |
| 6 | 86.1 | 87.7 |
| **AVERAGE** | **86.3** | **87.6** |

The lamps of Example 1, including a 4 phosphor blend in accord with the invention, exhibited in all instances a CRI of 87 or better, and simultaneously exhibited high LPW, at least in excess of 86.

### EXAMPLE 2

Six lamps were also prepared using a tri-phosphor blend in accord with conventional lamp technology, comprising YEO / Y₂O₃:Eu²⁺ (0.466wt%), LAP / LaPO₄:Ce³⁺,Tb³⁺ (0.442wt%), and BAM / BaMgAl₁₀O₁₇:Eu²⁺ (0.092wt%). The lamps were 4 foot F32T8 Linear Fluorescent Lamps at 4100 K. As is seen, this phosphor system includes the same red, green and blue phosphors as the system in Example 1. However, the blue-green phosphor of the system of Example 1 in accord with this disclosure is not included.

**TABLE 2: YEO-LAP-BAM PHOSPHOR SYSTEM**

| **LAMP NUMBER** | **LPW** | **CRI** |
|---|---|---|
| 1 | 89.3 | 83.0 |
| 2 | 90.9 | 82.8 |
| 3 | 89.6 | 83.3 |
| 4 | 90.2 | 83.1 |
| 5 | 91.4 | 83.0 |
| 6 | 89.6 | 83.5 |
| **AVERAGE** | **90.2** | **83.1** |

The lamps of Example 2 achieved a LPW value higher than that of the lamps of Example 1. However, the CRI value was below the desired 87 or better value. It can be concluded, therefore, by comparing the data from lamps with the phosphor coating system of Example 1 as compared to that of this Example 2, that the addition of the blue-geen phosphor, particularly BAMn, to the phosphor system, in accord with an embodiment of the invention, has resulted in a lamp having enhanced CRI performance characteristics with minimum LPW decrease.

### EXAMPLE 3

Three lamps were prepared using a four phosphor blend in which not all phosphors were rare earth phosphors. The blend in this conventional phosphor system included CBM / GdMgB5O10 : Ce3+, Mn2+ (3.01wt%), Halo / Ca5(PO4)3(F,Cl):Sb3+, Mn2+ (4.24wt%), SAE / Sr₄Al₁₄O₂₅:Eu²⁺ (2.57wt%), and Zn₂SiO₄:Mn²⁺ (0.18wt%). The lamps were 4 foot F32T8 Linear Fluorescent Lamps at 4100 K.

**TABLE 3: CBM-Halo-SAE-Zn2SiO4 PHOSPHOR SYSTEM**

| **LAMP NUMBER** | **LPW** | **CRI** |
|---|---|---|
| 1 | 54.5 | 92.0 |
| 2 | 54.9 | 92.0 |
| 3 | 54.9 | 92.0 |
| **AVERAGE** | **54.8** | **92.0** |

The lamps of Example 3 exhibited a very low LPW value, though they did achieve a very high CRI value, 92.

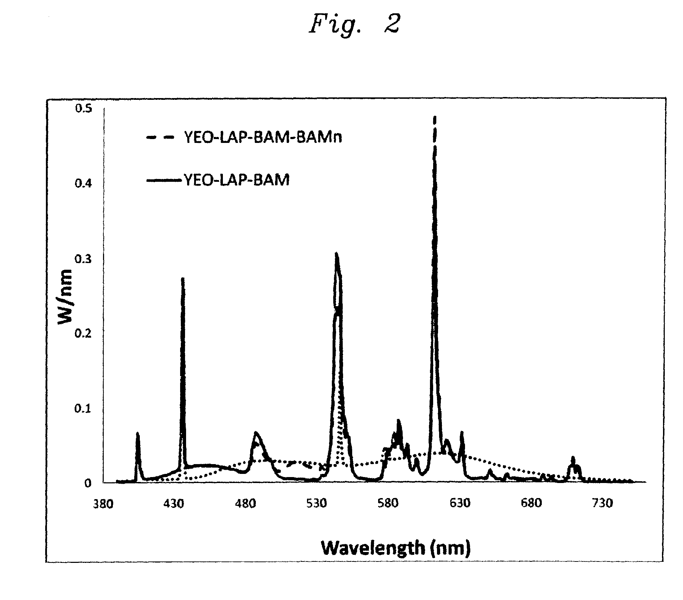

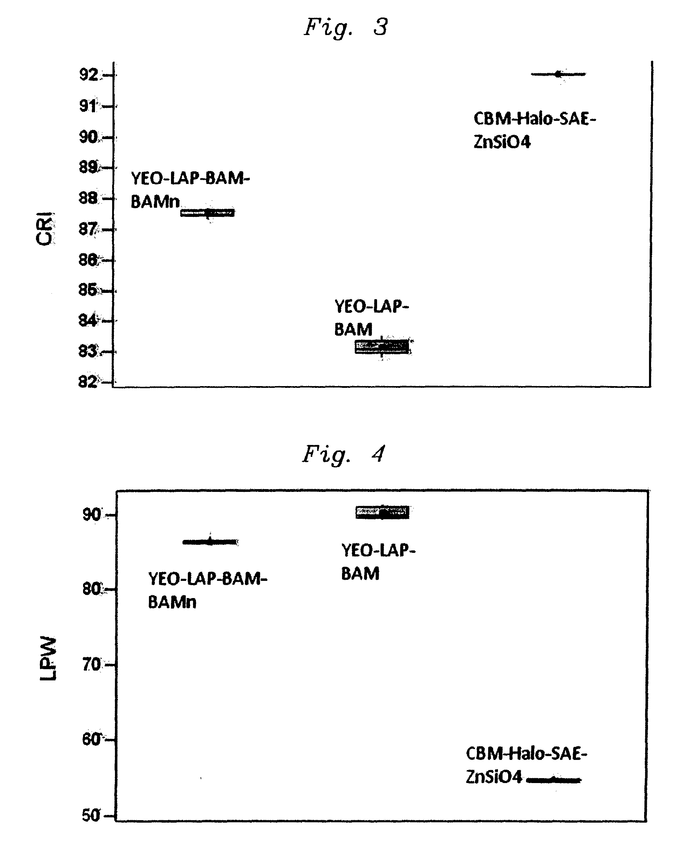

Figure 2 provides a graph showing the emission spectra for each of the phosphor blends of Examples 1, 2, and 3. The phosphor blend of Example 2, which is a known triphosphor blend and generated high LPW and moderate CRI typical of such blends (see Figures 3 and 4), is shown in Figure 2 to exhibit a narrow-band spectral emission. The phosphor blend of Example 3, corresponding to a commercially available blend not including 4 rare earth phosphors, generated high CRI but lower LPW characteristic of such design (see Figures 3 and 4), and is shown in Figure 2 to exhibit spectral emission consistent with this type of broad-band system, and including three narrow peaks due to the mercury in the fill. Figure 2 further includes the spectra generated from the phosphor blend of Example 1, having four rare earth phosphors consistent with the inventive aspect of the disclosure, which generates high CRI and LPW (see Figures 3 and 4), and further exhibits a unique spectral emission. The emission of the inventive phosphor blend includes a broad peak at about 500-530,correlating to the presence of BAMn in the phosphor blend, which is responsible for the improvement in CRI of the blend of Example 1 as compared to that of Example 2.

### EXAMPLE 4

Again, three lamps were prepared using a conventional strontium-based phosphor system comprising Sr-red / Sr3 (PO4)2 : Sn2+ (43.16wt%), Sr-blue /(Sr5(PO4)3(F,Cl) : Sb3+, Mn2+ (56.24wt%), and blue-Halo / Ca5(PO4)3(F,Cl):Sb3+, Mn2+ (0.59wt%). In this Example, as in each preceding example, the lamps were 4 foot F32T8 Linear Fluorescent Lamps, but the CCT was 5000 K.

**TABLE 4: SrRed-SrBlue-BlueHalo PHOSPHOR SYSTEM**

| **LAMP NUMBER** | **LPW** | **CRI** |
|---|---|---|
| 1 | 56.3 | 90.5 |
| 2 | 52.6 | 91.1 |
| 3 | 57.11 | 90.4 |
| **AVERAGE** | **55.3** | **90.7** |

The lamps of Example 4 exhibited a very low LPW value, though they did achieve a very high CRI value, 90.7. It is further noted that Examples 3 and 4 provide lamp data showing the same low LPW for lamps at two different CCT values, one higher, Example 4 at 5000 K and one lower, Example 3 at 4100 K. As such, it can be seen that use of another phosphor blend, unlike that disclosed herein, may not achieve the desired LPW and CRI even at different CCTs. Without intending to be bound by any one theory, it is considered that a lack of rare earth phosphor, especially LAP, in the coating may be the cause of low LPW for both Examples 3 and 4.

Figure 3 provides a graph of CRI data from the phosphor blends of Examples 1, 2, and 3. Figure 4 provides a graph of LPW for these same phosphor blends. By comparing these two graphs, Figures 3 and 4, it is observed that only the phosphor blend in accord with the invention disclosed herein exhibits both high CRI and LPW, while the other blends each only exhibit either acceptable CRI or LPW, but not both. From this, one can conclude that the inclusion of 4 rare earth phosphors in a coating for the conversion of UV light to preferred white light in the visible portion of the spectrum, and particularly a blend including one each of a red-, green-, blue- and blue-green-emitting phosphor proves advantageous.

### EXAMPLE 5

In this Example 5 three lamps were prepared in accord with the invention disclosed herein. The lamps of this example included a four rare earth phosphor system comprising YEO/Y₂O₃:Eu²⁺ (61.5wt%), LAP/LaPO₄:Ce³⁺, Tb³⁺ (25.8wt%), BAM/BaMgAl₁₀O₁₇:Eu²⁺ (4.2wt%), and SAE/Sr₄Al₁₄O₂₅:Eu²⁺ (8.5wt%), based on the total weight of the phosphor system. In this Example, as in each preceding example, the lamps were 4 foot F32T8 Linear Fluorescent Lamps, but the CCT was 3500 K.

**TABLE 4: YEO-LAP-BAM-SAE PHOSPHOR SYSTEM**

| **LAMP NUMBER** | **LPW** | **CRI** |
|---|---|---|
| 1 | 82.1 | 88.7 |
| 2 | 81.9 | 88.6 |
| 3 | 81.7 | 88.5 |
| **AVERAGE** | **81.9** | **88.6** |

The lamps of Example 5 demonstrate the advantage of four rare earth phosphor blend as taught herein even at lower CCT, proving that high CRI and LPW need not be sacrificed at lower CCT values.

As shown, only the 4 rare earth phosphor blend used in the lamps of Example 1, in accord with the disclosure, achieves both high CRI, i.e. above 87, and high LPW of greater than 80. The phosphor blend described above may be used in many different applications. For example, the material may be used as a phosphor in a lamp, in a cathode ray tube, in a plasma display device, or in a liquid crystal display. The material may also be used as a scintillator in an electromagnetic calorimeter, in a gamma ray camera, in a computed tomography scanner or in a laser. These uses are meant to be merely exemplary and not exhaustive. In a preferred embodiment, the phosphor is used in a fluorescent light, as described above.

Additional additives may be included in the phosphor blend and can include a dispersion vehicle, thickener, and one or more of various known non-luminescent additives, including, e.g., alumina, calcium phosphate, thickeners, dispersing agents, surfactants, and certain borate compounds as are known in the art.

In the coating procedure, typically the various phosphor powders are blended by weight. The resulting powder is then dispersed in a water based system (which may contain other additives as are known in the art, including adherence promoters such as fine non-luminescent particles of alumina or calcium pyrophosphate) optionally with a dispersing agent as is known in the art. A thickener may be added, typically polyethylene oxide. The dispersion is then typically diluted with deionized water until it is suitable for producing a coating of the desired thickness or coating weight. The phosphor blend coating is then applied to the inside of the glass tube, i.e. preferably by pouring the coating down the inside of a vertically-held tube or pumping the coating up into the tube, and heated by forced air until dry, as is known in the art. After the first thin coating or layer is applied, additionally desired thin coatings or layers may be applied in the same manner, carefully drying each coat before the next coat is applied. In the present invention, the thin layers, deposited in accord with known techniques, are built up until the total or cumulative coating thickness is sufficient to absorb substantially all of the UV light produced by the arc. This will typically be a phosphor layer of from about 3-7 particles thick. Although not intended to be limiting, this typically corresponds to a thickness of between about 3 and about 50 microns, preferably between 10 and 30 microns, depending on the exact composition of the phosphor blend and the particle size of the phosphors.

While the invention has been described in detail and with reference to specific embodiments thereof, it will be apparent to one skilled in the art that various changes and modifications can be made therein without departing from the scope of the invention. For example, the phosphor blend of the present invention can be used in a compact fluorescent lamp arrangement, which may be helical in nature or have another compact configuration.

## Claims

1. An arc discharge lamp (10) having high CRI and LPW, the lamp comprising:
a lamp envelope (12) enclosing a discharge space and having an inner surface; and
a phosphor blend (16) disposed on said inner surface, said blend comprising rare earth-doped phosphors including at least one of each of: a red phosphor having an emission peak at 590 -670 nm, a green phosphor having an emission peak at 515-550 nm, a blue phosphor having an emission peak at 440-490 nm and a blue-green phosphor having an emission peak at 475-525 nm, wherein said lamp simultaneously exhibits a CRI of at least 87 and an LPW of at least 80.

2. A lamp according to claim 1, wherein said phosphor blend (16) comprises a mixture of phosphors selected from the group consisting of europium-doped yttrium oxide (YEO), europium-doped yttrium vanadate-phosphate (Y(P,V)O₄:Eu), cerium- and manganese- coactivated gadolinium magnesium pentaborate including GdMgB5O10 : Ce3⁺, Mn2⁺ (CBM), cerium- and terbium-coactivated phosphors including LaPO₄:Ce³⁺, Tb³⁺ (LAP), Ce_{0.66}Tb_{0.33}MgAl₁₁O₁₉ (CAT), GdMgB₅O₁₀:Ce³⁺,Tb³⁺ (CBT), europium-doped halophosphate (SECA), europium-doped barium magnesium aluminate (BAM), europium- and manganese-coactivated barium magnesium aluminate (BAMn), and europium-doped strontium aluminate (SAE).

3. A lamp according to claim 1 or claim 2, wherein the weight fraction of the red phosphor is 0.40-0.70, the weight fraction of the green phosphor is 0.20-0.50, the weight fraction of the blue phosphor is 0.01-0.25, and the weight fraction of the blue green phosphor is 0.01-0.15, based on the weight fraction of the entire phosphor blend.

4. A lamp according to claim 3, wherein the weight fraction of the red phosphor is 0.48, the weight fraction of the green phosphor is 0.415, the weight fraction of the blue phosphor is 0.088, and the weight fraction of the blue green phosphor is 0.018.

5. A lamp according to any one of claims 1 to 4, wherein the phosphor blend (16) is disposed on said inner surface as one-coating layer, or as a two-coating layer comprising a first halo-phosphor layer and a second layer comprising the rare-earth phosphor blend.

6. A lamp according to any one of claims 1 to 5, further comprising a UV reflecting barrier layer between said phosphor layer and said lamp envelope (12).

7. A lamp according to any one of claims 1 to 6, wherein the red-emitting phosphor is selected from europium-doped yttrium oxide (YEO), europium-doped yttrium vanadate-phosphate (Y(P,V)O₄:Eu), cerium- and manganese- coactivated gadolinium magnesium pentaborate including GdMgB5O10 : Ce3⁺, Mn2⁺ (CBM).

8. A lamp according to any one of claims 1 to 7, wherein the green-emitting phosphor is selected from LaPO₄:Ce³⁺, Tb³⁺ (LAP), Ce_{0.66}Tb_{0.33}MgAl₁₁O₁₉ (CAT), GdMgB₅O₁₀ : Ce³⁺, Tb³⁺ (CBT).

9. A lamp according to any one of claims 1 to 8, wherein the blue-emitting phosphor is selected from europium-doped halophosphate (SECA), europium-doped barium magnesium aluminate (BAM).

10. A lamp according to any one of claims 1 to 9, wherein the green-emitting phosphor is selected from europium- and manganese-coactivated barium magnesium aluminate (BAMn), and europium-doped strontium aluminate (SAE).

11. A method for providing a discharge tube capable of white light emission exhibiting high CRI and LPW, the method comprising:
providing a discharge tube (12) defming an inner chamber having an inner surface and an ionizable fill disposed therein;
preparing a coating composition from a blend of particulate phosphors;
applying the coating to the inner surface of the discharge tube (12) and allowing it to dry to form a phosphor blend layer (16); and
energizing the ioniziable fill such that the phosphor blend is activated and white light is emitted from the lamp, the lamp exhibiting a CRI of at least 87 and an LPW of at least 80,
wherein the phosphor blend layer comprises rare earth-doped phosphors including at least one of each of: a red phosphor having an emission peak at 600-670 nm, a green phosphor having an emission peak at 515-550 nm, a blue phosphor having an emission peak at 440-490 nm and a blue-green phosphor having an emission peak at 475-525 nm.

12. A method according to claim 11, wherein said blending includes mixing phosphors selected from the group consisting of YEO, Y(P,V)O4:Eu, CBM, LAP, CAT, CBT, BAM, SECA, SAE, and BAMn.

13. A method according to claim 11 or claim 12, wherein said phosphor blend comprises a mixture of YEO, LAP, BAM, and BAMn, or a mixture of YEO, LAP, BAM, and SAE.

14. A method according to claim 11, 12 or 13, wherein the weight fraction of the red phosphor is 0.40-0.70, the weight fraction of the green phosphor is 0.20-0.50, the weight fraction of the blue phosphor is 0.01-0.25, and the weight fraction of the blue green phosphor is 0.01-0.15, based on the weight fraction of the entire phosphor blend.

15. A method according to any one of claims 11 to 14, wherein the weight fraction of the red phosphor is 0.48, the weight fraction of the green phosphor is 0.415, the weight fraction of the blue phosphor is 0.088, and the weight fraction of the blue green phosphor is 0.018.

16. A method according to any one of claims 11 to 15, wherein the phosphor blend layer (16) is applied on said inner surface as a one-coating layer or as a two-coating layer comprising a first halo-phosphor layer and a second layer comprising the rare-earth phosphor blend.
